(19) Europäisches Patentamt
European Patent Office
Office européen des brevets

(11) Publication number: **0 021 619**
**A1**

(12) **EUROPEAN PATENT APPLICATION**

(21) Application number: 80301780.5

(22) Date of filing: 29.05.80

(51) Int. Cl.³: C 09 B 67/26
C 09 B 67/54, C 09 B 69/04

(30) Priority: 12.06.79 GB 7920452

(43) Date of publication of application: 07.01.81 Bulletin 81/1

(84) Designated Contracting States: CH DE GB IT LI

(71) Applicant: IMPERIAL CHEMICAL INDUSTRIES LIMITED
Imperial Chemical House Millbank
London SW1P 3JF(GB)

(72) Inventor: Bamfield, Peter
18 Links Road
Romiley Stockport SK6 4NU(GB)

(72) Inventor: Lawson, John Robert
23 Barrowfields
Middleton Manchester M24 3BA(GB)

(72) Inventor: Quan, Peter Michael
23 Hawthorn Road Bamford
Rochdale Lancashire OL11 5JQ(GB)

(74) Representative: Stephenson, Kenneth et al,
Imperial Chemical Industries Limited Legal Department: Patents Thames House North Millbank
London SW1P 4QG(GB)

(54) **A method of making concentrated aqueous solutions of dyes and these solutions.**

(57) A method of making a concentrated aqueous solution of a dye containing one or more sulphonic acid groups comprising intimately contacting a first aqueous phase comprising an acidic solution of the dye with an organic phase comprising a solution, in an inert water-immiscible organic solvent, of an amine having a greater affinity for the solvent than for water, thereby extracting dye anion from the aqueous phase into the organic phase forming a solution of the amine salt of the dye in the organic solvent, and intimately contacting the organic phase with a second aqueous phase which comprises an aqueous solution of a base having greater affinity for water than for the organic solvent and has a higher pH than the first aqueous phase, thereby extracting dye anion from the organic phase into the second aqueous phase to form a concentrated aqueous solution of the salt of the dye and the base.

EP 0 021 619 A1

Croydon Printing Company Ltd.

This invention relates to a chemical process and more particularly to a method of making a concentrated aqueous solution of a dye containing one or more sulphonic acid groups.

Organic dyes which are water-soluble because of the presence of one or more sulphonic acid groups in the dye molecule are well known and are used for many purposes. They are used, for example, in the dyeing and printing of wool, silk, nylon and cotton textile materials as well as for the coloration of paper and leather.

In most cases, these dyes are manufactured in the form of powders which must be dissolved in water by the dyer. For some purposes it would be more convenient for the dyer if the dye was supplied in the form of a concentrated aqueous solution. Such solutions are of assistance to the dyer in that he no longer needs to handle dusty powders nor to involve himself in the time-consuming process of preparing solutions. The preparation of concentrated aqueous solutions of dyes containing sulphonic acid groups can cause difficulty however. The dyes are most frequently manufactured in the form of their sodium salts, the aqueous solubility of which, in a pure form, is often not high and is further depressed by the presence of the normal impurities of manufacture such as sodium chloride, sodium sulphate, sodium acetate and other such salts.

In order to improve the water solubility of commercially manufactured dyes and thereby facilitate the preparation of concentrated solutions, methods have been proposed for removing the impurities and also for

converting the sodium salts of the dyes to other salts having higher solubility. These methods have not been entirely successful however.

The present invention provides a method of making a concentrated aqueous solution of a dye containing one or more sulphonic acid groups comprising intimately contacting a first aqueous phase comprising an acidic solution of the dye with an organic phase comprising a solution, in an inert water-immiscible organic solvent, of an amine having a greater affinity for the solvent than for water, thereby extracting dye anion from the aqueous phase into the organic phase forming a solution of the amine salt of the dye in the organic solvent, and intimately contacting the organic phase with a second aqueous phase which comprises an aqueous solution of a base having greater affinity for water than for the organic solvent and has a higher pH than the first aqueous phase, thereby extracting dye anion from the organic phase into the second aqueous phase to form a concentrated aqueous solution of the salt of the dye and the base.

The dye used in the process of the present invention may be any dye containing one or more sulphonic acid groups and it may belong to any of the chemical classes and application classes to which such dyes normally belong. Thus, particular mention may be made of acid, reactive and direct dyes containing from one to six sulphonic acid groups in the molecule and belonging to the usual chemical classes such as the azo and anthraquinone classes.

When incorporated into the first aqueous phase, the dye may be in the form of the free acid or a salt thereof,

for example a sodium, potassium or ammonium salt. Any acid may be used to form the acidic solution of the dye, sulphuric acid being particularly suitable. Preferably, an appropriate amount of acid is used to maintain the pH of the solution between 2 and 4.5. The aqueous phase may also contain other materials from which it is desired to isolate the dye. Such materials include salts such as sodium chloride, sodium sulphate, sodium acetate and the corresponding potassium and ammonium salts which may be added or formed during the dye manufacturing or isolation process.

The inert water-immiscible solvent contained in the organic phase is inert towards all the components of the system. Essentially this means being inert to the amine, the dye and the water. Preferably, the solvent has a very low solubility in water. Examples of suitable solvents include petroleum fractions, for example kerosenes and white spirits, industrial aromatic solvent mixtures, toluenes, xylenes, ethyl acetate, butyl acetate and higher esters, methyl isoamyl ketone, octyl alcohol, methylene chloride, chloroform, chlorobenzene, anisole and acetophenone.

The amine present in the water-immiscible organic solvent may be any amine that is sufficiently solvent-soluble and hydrophobic to reside almost completely in the organic phase both as the free amine and as its salts. In fact, during operation of the method of the invention, there will be competition between the amine salt of the acid and the amine salt of the dye such that the former is predominantly in the first aqueous phase and the latter is predominantly in the organic phase.

The amine may contain substituents or functional groups such as halogen atoms, ether groups, ester groups, benzyl groups or carbon-carbon double bonds.

Particularly suitable amines for inclusion in the organic solvent are saturated aliphatic amines having 12 or more carbon atoms. Secondary and especially tertiary amines are preferred to primary amines because they have less tendency to form stable emulsions between the organic phase and the aqueous phases. Examples of suitable amines include dilaurylamine, stearyldimethylamine, tripentylamine, trinonylamine, tridecylamine, trilaurylamine, trioctylamine and tri-iso-octylamine.

The base present in the second aqueous phase is chosen so as to provide the required counterions or mixture of counterions for the dye anions. Thus, the process of the invention may be used deliberately to change the counterion originally associated with the dye anion, for example to change the sodium salt of a dye to an amine salt. In other cases, the counterion provided by the second aqueous phase is the same as that originally associated with the dye anion. In these latter cases, the primary function of the process of the invention may be to concentrate the dye by transfer from the first aqueous phase to a smaller quantity of water or to separate the dye from electrolyte impurities, such as salt.

Suitable bases which may be present in the second aqueous phase include sodium hydroxide, potassium hydroxide, lithium hydroxide, magnesium oxide, sodium carbonate, potassium carbonate and sodium bicarbonate. Particularly useful bases are ammonia and amines so long as they have greater affinity for water than for the organic solvent. Examples of suitable amines include methylamine, dimethylamine, ethanolamine and

diethanolamine. It is a particularly valuable and surprising feature of the invention that ammonia, though a weaker base than the preferred amines in the organic phase, will deprotonate the amine under the process conditions so that when used in just greater than theoretical amount it will efficiently strip the dye from the organic phase. Preferably, an amount of base is used to maintain the pH of the second aqueous phase between 6 and 11 although a more important factor is the pH difference between the two aqueous phases. Preferably, the pH of the second aqueous phase is at least 3 units higher than that of the first aqueous phase.

According to one embodiment of the invention, the first aqueous phase is brought into intimate contact with the organic phase using any suitable means of producing intimate contact between two immiscible liquids. This contact is maintained until the required transfer of dye anion from the aqueous phase to the organic phase has taken place. The organic phase is then maintained in intimate contact with a second aqueous phase until the required transfer of dye anion from the organic phase to the second aqueous phase has taken place. This procedure can then, if desired, be repeated one or more times after appropriate adjustment of the pH values of the two aqueous phases to get maximum transfer of dye from the first to the second aqueous phase.

A simple process of this type provides a highly efficient method of preparing a concentrated aqueous solution of the dye and/or of changing the associated cations to those which are required. It also achieves a reduction in the relative amount of other anions present in the crude

dye solution. To a variable extent, however, such anions are transported from the first aqueous phase into the second aqueous phase in competition with the dye. If it is particularly required that the level of other anions in the final solution should be very low then it may be necessary to recycle the purified dye one or more times, or more efficiently, to operate counter-current extractions according to procedures well known in the art. It is further noted that the selectivity for any particular dye compared with smaller anions such as sulphate, chloride and acetate is increased by using a non-polar solvent, such as a hydrocarbon or a solvent mixture with a high hydrocarbon content, rather than a more polar solvent such as methylene chloride or an alcohol, and that the selectivity is also improved by operating with relatively high concentrations of amine in the organic phase, and by using a higher ratio of water to solvent in the first extraction stage.

In a further embodiment, the process of the invention is carried out continuously, the organic phase being in contact with both aqueous phases simultaneously but with no direct contact between the two aqueous phases.

The invention is illustrated but not limited by the following Examples in which all parts and percentages are by weight. The dye formulae given in the Examples relate to the free acid forms of the dyes.

Example 1

54 parts of an aqueous solution (A) containing 11.4% of the dye of the formula shown below together with the counter-ions and impurities listed below is stirred with an organic solution comprising 5.0 parts of tri(3,5,5-trimethylhexyl)amine and 44 parts of toluene, and the pH is adjusted to 2.5 by addition of 38% sulphuric acid. It is observed that on addition of the acid, dyestuff passes from A into the organic solution. The solutions are allowed to settle and separate and the organic solution is removed and shaken with 20 parts of water (solution B) and the pH of this mixture is adjusted to between 8.0 and 8.5 with 18.5% ammonia solution when virtually all the dyestuff passes from the organic solution into solution B. The organic solution is again separated and is alternately shaken with A (with pH adjustment to 2.5) and B (with pH adjustment to 8.0 - 8.5) until, after a total of three cycles it is found that 83.7% of the dye but only 19.2% of the chloride ion have passed from A to B. After a fourth cycle it is found that 98.4% of the dye and 30% of the chloride ion have passed from A to B, and that the strength of B in dye is 19.3%.

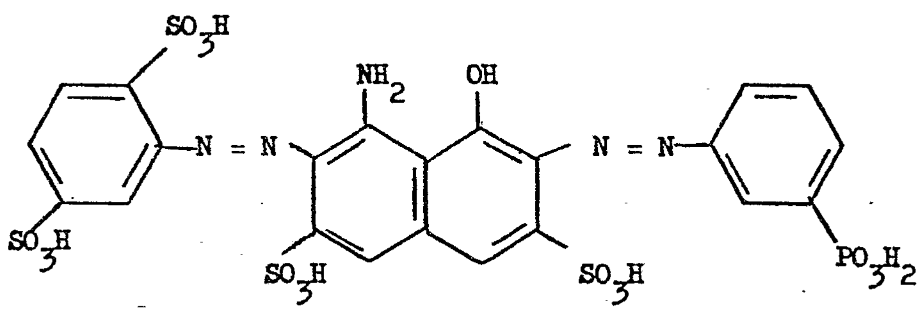

Samples of the dye solution before concentration (A) and after concentration and purification (B) are analysed with the results shown in the following table.

| Species: | Dye(I) | $Ca^{++}$ | $Na^+$ | $NH_3$ | $Cl^-$ | $SO_4^=$ | $CH_3COO^-$ |
|---|---|---|---|---|---|---|---|
| Initial solution (pph) | 11.4 | 0.012 | 0.3 | 2.3 | 2.1 | 0.00 | 0.19 |
| Concentrated solution B (pph) | 19.3 | 0.0015 | 0.025 | 3.2 | 1.1 | 0.00 | 0.16 |

Examples 2, 3 and 4 illustrate a simple two-part extraction which may be used to achieve virtually complete removal of dye from the first aqueous solution (A), with decreased transfer of other anions to the purified and concentrated aqueous solution (B). The general procedure is as follows. The organic phase is stirred with A and this mixture is titrated with 17.5% sulphuric acid until between 85% and 95% of the dye has been extracted. The organic phase is then separated and stripped with a small volume of water (B) by addition of ammonia solution as described in Example 1. The organic phase is then returned to the incompletely extracted solution (A) and the mixture is stirred and titrated with acid until less than 1% of dye remains in A, which is discarded. This sequence of operations constitutes a single cycle. The organic phase containing 5-15% of dye, together with anionic impurities is retained to be contacted with a second batch of A in the first stage of the next cycle. The same solution B is used in successive cycles until it has attained the required concentration of dye.

Example 2

Dye:

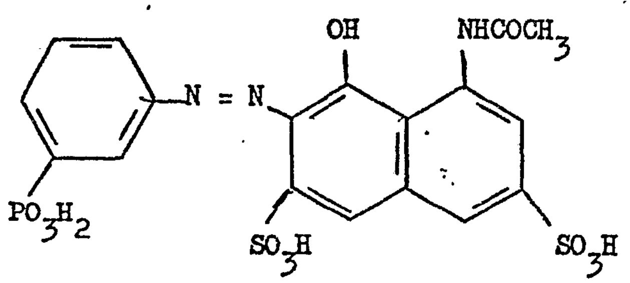

Solution A: 107 parts of 9.8% solution in each cycle.

Organic phase: Tricaprylylamine (25 parts), butyl acetate (44 parts), toluene (44 parts).

Solution B: Water (30 parts in each cycle)

Number of cycles: 2

Dye retained in organic phase: 7% of total.

Dye in concentrated and purified solutions (B combined): 92% of total

Analysis

| Species: | Dye | $Na^+$ | $NH_4^+$ | $SO_4^=$ | $Cl^-$ | $CH_3COO^-$ |
|---|---|---|---|---|---|---|
| Initial solution (pph) | 9.8 | 0.9 | 1.02 | 0.13 | 0.70 | 2.1 |
| Concentrated solution (pph) | 17.5 | 0.006 | 2.2 | 0.025 | 0.35 | 1.1 |

Example 3

Dye:

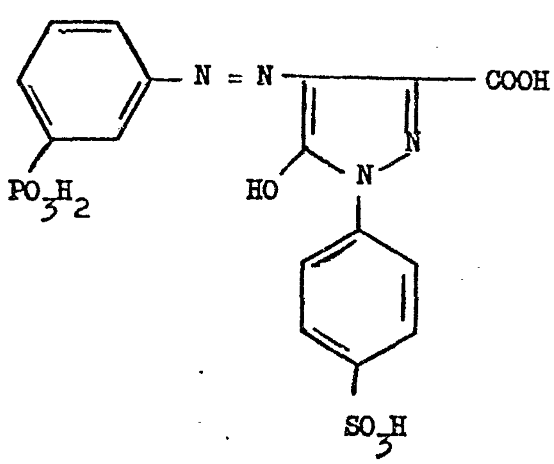

Solution A : 54.5 parts of 14.1% solution per cycle

Organic phase: Tricaprylylamine (25 parts), butyl acetate (44 parts), toluene (44 parts).

Solution B : Water (30 parts)

Number of cycles: 4

Dye retained in organic phase: 2.7% of total

Dye in concentrated and purified solution (B): 96.5% of total

Analysis:

| Species: | Dye | $Na^+$ | $NH_4^+$ | $Cl^-$ | $SO_4^=$ |
|---|---|---|---|---|---|
| Initial solution (pph) | 14.1 | 2.2 | 1.9 | 1.4 | 0.3 |
| Concentrated solution (pph) | 30.0 | 0.01 | 5.6 | 0.94 | 0.03 |

Example 4

This example illustrates the concentration of a reactive dye which would not be stable as its ammonium salt, with simultaneous conversion from the sodium to the more soluble lithium salt, and removal of much accompanying sodium chloride. The procedure is that described in Examples 2 and 3 except that an approximately 10% aqueous solution of lithium hydroxide is used instead of ammonium hydroxide.

Dye:

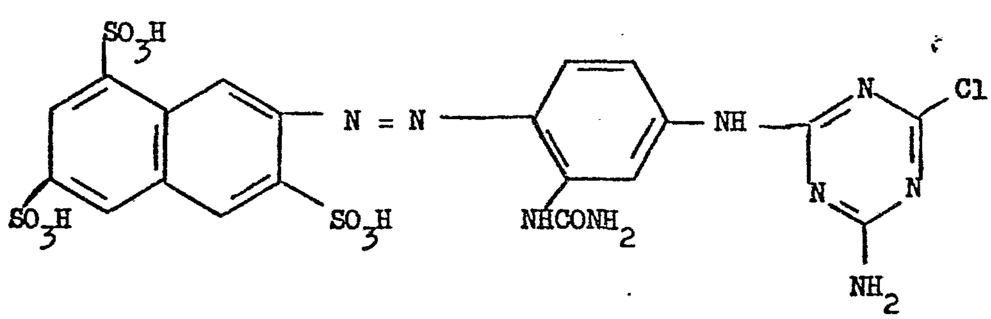

Solution A: 107 parts of 7.26% solution per cycle

Organic phase: Tricaprylylamine (20.4 parts), butyl acetate (88 parts), toluene (88 parts)

Solution B: Water (25 parts per cycle)

Number of cycles: 3

Dye retained in organic phase: 17.9% of total

Dye in concentrated and purified solution: 81.7% of total

Analysis

| Species: | Dye | $Cl^-$ |
|---|---|---|
| Initial solution (pph) | 7.26 | 2.43 |
| Concentrated solution (pph) | 19.5 | 0.73 |

Example 5

This Example demonstrates how the selectivity for extraction of dyestuff compared with the extraction of chloride ion may be further improved either by using less solvent in the organic phase or by using more water in the first aqueous phase. In each of Runs 1-6, 0.001 mole (1m mole) of the sodium salt of the dyestuff used in Example 4, and 6.43 m.mole of sodium chloride are dissolved in water, and contacted with a solution of 4.4 m.mole of tricaprylylamine dissolved in an organic solvent comprising equal parts by volume of ethyl acetate and toluene. The mixture is acidified with 1.25 m.mole (2.5 m equivalents) of sulphuric acid, well mixed, and allowed to separate. The volumes of water and organic solvent used are varied, and for each run are listed in columns 2 and 3 of the Table. The amounts

of dyestuff and chloride ion transferred to the organic phase at equilibrium, each as a percentage of the amount initially taken, are found to be as listed in columns 4 and 5 respectively. For convenience in comparison of the results, the selectivity of the extraction, defined as:

$$\frac{\text{Amount of Dye in organic phase}}{\text{Amount of Dye in aqueous phase}} \times \frac{\text{Amount of Cl}^- \text{ in aqueous phase}}{\text{Amount of Cl}^- \text{ in organic phase}}$$

is listed in column 6.

| Run Number | Volume of Water (ml) | Volume of Solvent (ml) | Dye in Solvent (%) | $Cl^-$ in Solvent (%) | Selectivity |
|---|---|---|---|---|---|
| 1 | 50 | 200 | 64 | 5.95 | 28 |
| 2 | 50 | 100 | 69 | 3.88 | 55 |
| 3 | 50 | 50 | 72 | 2.63 | 95 |
| 4 | 110 | 50 | 74 | 1.88 | 148 |
| 5 | 150 | 50 | 75 | 1.60 | 185 |
| 6 | 250 | 50 | 76 | 1.40 | 218 |

The extracted dyestuff and chloride ion are obtained in aqueous solution by stripping the organic solution with a second aqueous phase containing alkali as described in previous Examples.

CLAIMS

1. A method of making a concentrated aqueous solution of a dye containing one or more sulphonic acid groups comprising intimately contacting a first aqueous phase comprising an acidic solution of the dye with an organic phase comprising a solution, in an inert water-immiscible organic solvent, of an amine having a greater affinity for the solvent than for water, thereby extracting dye anion from the aqueous phase into the organic phase forming a solution of the amine salt of the dye in the organic solvent, and intimately contacting the organic phase with a second aqueous phase which comprises an aqueous solution of a base having greater affinity for water than for the organic solvent and has a higher pH than the first aqueous phase, thereby extracting dye anion from the organic phase into the second aqueous phase to form a concentrated aqueous solution of the salt of the dye and the base.

2. A method according to claim 1 wherein the first aqueous phase has a pH between 2 and 4.5.

3. A method according to claim 1 or claim 2 wherein the amine present in the organic solvent is a saturated aliphatic amine having 12 or more carbon atoms.

4. A method according to claim 3 wherein the amine is a secondary amine.

5. A method according to claim 3 wherein the amine is a tertiary amine.

6. A method according to any one of the preceding claims wherein the base present in the second aqueous phase is ammonia or lithium hydroxide.

7. A method according to any one of the preceding claims wherein the second aqueous phase has a pH between 6 and 11.

8. A method according to any one of the preceding claims wherein the pH of the second aqueous phase is at least 3 units higher than that of the first aqueous phase.

9. A concentrated aqueous solution of a dye whenever prepared by a method according to any one of the preceding claims.

KS/BH
28.5.80.

0021619

European Patent Office

# EUROPEAN SEARCH REPORT

Application number
EP 80 30 1780

## DOCUMENTS CONSIDERED TO BE RELEVANT

| Category | Citation of document with indication, where appropriate, of relevant passages | Relevant to claim |
|---|---|---|
| | CHEMICAL ABSTRACTS, vol. 86, no. 26, June 27, 1977, ref. 191321p, COLUMBUS, OHIO (US)<br>& JP - A - 77 19 725 (TAOKA CHEMICAL CO. LTD.) 15-02-1977<br>* abstract *<br>--- | 1,3,5 |
| | TEXTILE RESEARCH JOURNAL, vol. 41, no. 11, 1971, pages 923-927 Textile Research Institute PRINCETON, NEW JERSEY (US) D.M. HALL et al.: "Practical Methods for Purification of Anionic Dyes as Their Sodium, Potassium and Lithium Salts"<br>* page 923, right-hand column, line 19 to page 924, left-hand column, line 12 *<br>--- | 1,2 |
| A | FR - A - 2 132 680 (HOECHST) | |
| A | FR - A - 2 388 864 (SANDOZ) | |
| A | GB - A - 1 216 975 (VYZKUMNY USTAV PARDUBICE) | |
| A | DE - A - 2 000 043 (ICI) | |

---------

CLASSIFICATION OF THE APPLICATION (Int. Cl. 3)

C 09 B 67/26
67/54
69/04

TECHNICAL FIELDS SEARCHED (Int.Cl. 3)

C 09 B 67/26
67/24
67/54
67/44
69/04
69/02

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | September 18, 1980 | DAUKSCH |